# EUROPEAN PATENT APPLICATION

(11) **EP 2 804 365 A1**
(43) Date of publication of application: **19.11.2014**
(21) Application number: 13305623.4
(22) Date of filing: 16.05.2013
(51) Int. Cl.: H04M 1/725

(54) **Method to provide a visual feedback to the pairing of electronic devices**

(71) Applicant: Orange, 75015 Paris (FR)
(72) Inventor: Hegab, Ashraf, LONDON, SE15 6QX (GB); Colantonio, Luca, LONDON, SE16 5HN (GB); Leveque, Laurent, LONDON, W37TT (GB)

(57) **Abstract**

Present invention relates to an electronic device (100) comprising a display element (110) and a microphone (160), the electronic device (100) further comprising a control circuit (120) adapted to: render on the display element (110) a GUI of an application program, monitor using the microphone (160) an audio signal emitted by a second electronic device (210), calculate a first parameter value using the strength of the received audio signal and adapt the GUI according to the value of the first parameter.

## Description

### FIELD OF THE PRESENT SYSTEM:

The present invention generally relates to electronic devices, and more specifically to the pairing of electronic devices.

### BACKGROUND OF THE PRESENT SYSTEM:

Today electronic devices such as mobile devices, tablets and the likes allow rendering graphical objects through GUIs (Graphical User Interfaces). A user may even possess multiple such devices.

Their respective displays may be used to present an enlarged screen by placing these devices next to each other. Document WO2010001371 teaches a virtual display or virtual screen between a plurality of electronic devices placed next to each other. Thanks to this virtual display, a large image or video can be distributed among the devices so that all portions displayed form together the large image or part of it. Such technique needs the devices to be placed in contact with one another, and relies upon NFC (Near Field Communication) techniques to exchange display information. Furthermore, their edges in contact allow the different devices to position one device with another.

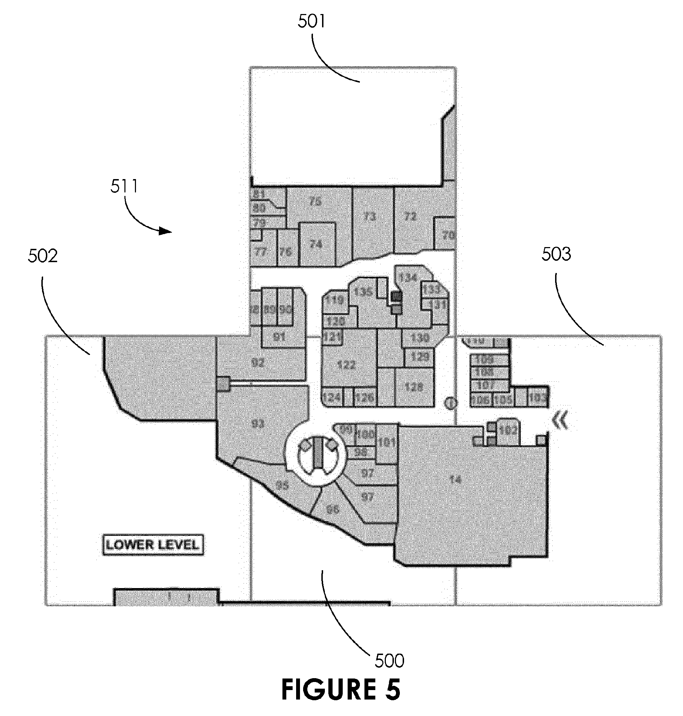

FIG. 5. is an illustration of such situation, where the four electronic devices 500, 501, 502 and 503 are used to share a same large image (here the "lower level" map of a building, as mentioned in the display of electronic device 502).

Such approach needs a specific kind of display devices, such as an electronic paper using both NFC and contact technologies.

When dealing with known devices such as tablets or mobile devices, this fluid display cannot be transposed as the specific technologies mentioned here above are not commonly found. A user may only have access to a limited number of devices to create a virtual screen and discover a large image. Furthermore, the user may want to move one of his devices around to explore other parts of the large image while existing method relies on contact technologies.

There is still a need today to enable a virtual screen using a limited number of devices. There is a further need to enable such a virtual screen using the existing capabilities of common electronic devices.

### SUMMARY OF THE PRESENT SYSTEM:

It is an object of the present system to overcome disadvantages and/or make improvements in the prior art.

The present system relates to a method to provide a visual feedback to the pairing of electronic devices.

*The present system relates to an electronic device comprising a display element and a microphone, the electronic device further comprising a control circuit adapted to render on the display element a GUI of an application program, monitor using the microphone an audio signal emitted by a second electronic device, calculate a first parameter value using the strength of the received audio signal and adapt the GUI according to the value of the first parameter.*

Such a system allows an adaptation of a GUI of an application program executed by a first electronic device according to the received strength of an audio signal emitted by a second electronic device. Advantageously, this allows for example to give a visual feedback of the distance between the first and second electronic devices. Indeed, the size of a part of the GUI - a graphical object - or the size of the whole GUI may vary according to the strength of the received audio signal, the size increasing when the second electronic device gets closer to the first electronic device.

*In a complementary embodiment of present system, the control circuit of the electronic device is further arranged to pair with the second electronic device prior to rendering the GUI of the application program.*

Thus, a user with various electronic devices may easily and intuitively find out which of the various electronic devices are paired together. Indeed, the GUI of the application program will indicate when the two paired electronic devices are getting closer, for example by increasing the size of the GUI or the size of a graphical object of the GUI. This is an intuitive and easy way of providing a visual feedback when pairing two electronic devices. The previous pairing may comprise a step of sharing an image or more generally of a display between the two paired devices. In this case, the shared display may vary according to the strength of the received audio signal. This is particularly advantageous when the two paired electronic devices are used to recreate a virtual screen. In this situation, a virtual display is shared between the two electronic devices, each electronic device rendering on its display a part of the virtual display according to its position. More generally, the strength of the audio signal from the second electronic device may be used as a control input for the application program executed on the first electronic device.

*In a further embodiment of present system, the control circuit of the electronic device is further arranged to receive audio parameters from the second electronic device and calculate the first parameter using the strength of the received audio signal and the audio parameters received from the second electronic device.*

Advantageously, the second electronic device provides to the first electronic device audio parameters in order to improve the efficiency of the method. This step is similar to a calibration step. For example, the second electronic device sends a message containing an indication of the strength of the emitted signal. Comparing this strength to the strength of the received signal the first electronic device may more accurately calculate the first parameter and thus adapt the GUI. For example, the first electronic device will know that when the received signal strength is close to the value of the signal strength emitted by the second device, this should mean that the two electronic devices are next to the other. In this case, and to keep on the example of the variation of the size of the GUI, the application program will adapt the GUI by maximizing its display size. As well, the first electronic device may advantageously use received audio parameters and a model of sound attenuation as to evaluate the distance between the two electronic devices and adapt the GUI by displaying the evaluation of the distance between the two electronic devices. Alternatively, an audio parameter can be an indication of the nature of the second electronic device, allowing the first electronic device to retrieve in a database characteristics attached to the second electronic device. These characteristics can be used to calculate the first parameter and may comprise speaker characteristics for the second electronic device, typical strength of audio signal emitted by electronic device models similar to the second electronic device ...

*In a complementary embodiment of present system, the control circuit of the electronic device is further arranged to send the first parameter to the second device.*

Advantageously, the first electronic device may send to the second electronic device the first parameter, the first parameter value being calculated using the strength of the received audio signal emitted by the second electronic device. Thus, the second electronic can compare the value of the first parameter to the strength of the audio signal that it emitted. Using some attenuation model, the second electronic device can possibly deduce an estimation of the distance between the first and second electronic devices.

*In a further embodiment of present system, the control circuit of the electronic device is further arranged to monitor using the microphone an audio signal emitted by a third electronic device, calculate a second parameter value using the strength of the received audio signal from the third electronic device and adapt the GUI according to the value of the first parameter and the second parameter.*

This embodiment of the present system allows the first electronic device to adapt the GUI of the application program to the strength of two audio signals emitted respectively by a second and a third electronic device. This present system advantageously allows the first electronic device to get for example an estimation of the distance between the first electronic device and respectively the second and third electronic device and to adapt accordingly the GUI. This would allow the first electronic device to adapt the GUI differently when the second electronic device is closer than the third electronic device for example.

*In a complementary embodiment of present system, the control circuit of the electronic device is further arranged to pair with the third electronic device prior to rendering the GUI of the application program.*

By having the three electronic devices paired, they may for example share an image (or possibly a video). Thus, the application program of the first electronic device may adapt the GUI on the display element of the first electronic device by displaying a part of the shared image or video according to the values of the first and second parameters.

*In a further embodiment of present system, the control circuit of the electronic device is further arranged to receive audio parameters from the third electronic device and calculate the second parameter using the strength of the received audio signal and the audio parameters received from the third electronic device.*

Again, it is advantageous to receive an audio parameter from the third electronic device as to facilitate the calibration of the system and improve the calculation of the second parameter.

*In a complementary embodiment of present system, the control circuit of the electronic device is further arranged to send the second parameter to the third device.*

Similarly to previous situation where the first parameter is sent to the second electronic device, and for the same reasons, it is advantageous to send the second parameter to the third electronic device.

*In a further complementary embodiment of the present system, the control circuit of the electronic device is further arranged to receive from either one of the second or third electronic device a third parameter characterizing a distance between said electronic devices and adapt the GUI according to the values of the first, second and third parameters.*

This step is particularly advantageous as it allows the first electronic device to receive either from the second or the third electronic device a third parameter characterizing the distance between the second and third electronic devices. Using the first and second parameters, calculated using the received audio signals from second and third electronic devices, and possibly some audio parameters respectively sent by the second and third electronic devices, and using this third parameter, the first electronic device may calculate via some trigonometric formulas the positioning of the thee devices relatively to each other. This is particularly advantageous when displaying a virtual screen shared on the three devices. Getting the positions of the two others devices, the first electronic device may adapt the display of its GUI as to take into account possible movements of the other two devices, or its own movement comparing to the two others devices. The user may move the first device, sweeping the virtual display, the application program, using present system will adapt the GUI on the display element of the first electronic device by showing the part of the virtual screen corresponding to the position of the first electronic device comparing to the two others electronic devices.

Finally, one object of the invention concerns a computer program, in particular computer programs on or in an information medium or memory, suitable for implementing the method for providing a visual feedback to the pairing of electronic devices object of the invention. These programs can use any programming language, and be in the form of source code, binary code, or of code intermediate between source code and object code such as in a partially compiled form, or in any other desirable form for implementing the methods according to the invention.

The information medium may be any entity or device capable of storing the program. For example, the medium can comprise a storage means, such as a ROM, for example a CD ROM or a microelectronic circuit ROM, or else a magnetic recording means, for example a diskette (floppy disk) or a hard disk.

### BRIEF DESCRIPTION OF THE DRAWINGS:

The invention is explained in further detail, and by way of example, with reference to the accompanying drawings wherein:
FIG. 1 shows an exemplary embodiment of an electronic device in accordance with present system;
FIG. 2 shows an exemplary embodiment of two electronic devices implementing the present method;
FIG. 3 shows an exemplary embodiment of three electronic devices implementing the present method;
FIG. 4 shows an exemplary flowchart for providing a visual feedback to the pairing of electronic devices according to an embodiment of the present method, and;
FIG. 5 shows an exemplary embodiment of four electronic devices sharing their displays to display a shared image in accordance with known methods.

### DETAILED DESCRIPTION OF THE PRESENT SYSTEM:

The following are descriptions of illustrative embodiments that when taken in conjunction with the following drawings will demonstrate the above noted features and advantages, as well as further ones. In the following description, for purposes of explanation rather than limitation, illustrative details are set forth such as architecture, interfaces, techniques, element attributes, etc. However, it will be apparent to those of ordinary skill in the art that other embodiments that depart from these details would still be understood to be within the scope of the appended claims. Moreover, for the purpose of clarity, detailed descriptions of well known devices, circuits, tools, techniques and methods are omitted so as not to obscure the description of the present system. It should be expressly understood that the drawings are included for illustrative purposes and do not represent the scope of the present system. In the accompanying drawings, like reference numbers in different drawings may designate similar elements.

The term rendering and formatives thereof as utilized herein refer to providing content, such as digital media or a graphical user interface (GUI), such that it may be perceived by at least one user sense, such as a sense of sight and/or a sense of hearing. For example, the present system may render a user interface on a touch display device so that it may be seen and interacted with by a user. The term rendering may also comprise all the actions required to generate a GUI prior to the display, like e.g. a map image or a GUI comprising a plurality of icons generated on a server side for a browser application on a mobile device.

The system, device(s), method, user interface, etc., described herein address problems in prior art systems. In accordance with an embodiment of the present system, a mobile device or electronic device provides a GUI for controlling an application program, possibly through touch and motion inputs.

A graphical user interface (GUI) may be provided in accordance with an embodiment of the present system by an application program running on a processor, such as part of a computer system of a mobile device and/or as provided by a network connected device, such as a web-based server hosting the application. The provided visual environment may be displayed by the processor on a display element of the mobile device.

A GUI is a type of user interface which allows a user to interact with electronic devices such as computers, hand-held devices, household appliances, office equipment and the likes. GUIs are typically used to render visual and textual images which describe various visual metaphors of an operating system, an application, etc., and implemented on a processor/computer including rendering on a display device. Furthermore, GUIs can represent programs, files and operational functions with graphical images, objects, or vector representations. The graphical images can include windows, fields, dialog boxes, menus, icons, buttons, cursors, scroll bars, maps, etc. Such images can be arranged in predefined layouts, or can be created dynamically (by the device itself or by a web-based server) to serve the specific actions being taken by a user. In general, the user can select and/or activate various graphical images in order to initiate functions and tasks, i.e. controls, associated therewith. By way of example, a user can select a button that opens, closes, minimizes, or maximizes a window, or an icon that launches a particular program. By way of another example, the GUI may present a typical user interface including a windowing environment and as such, may include menu items, pull-down menu items, pop-up windows, etc., that are typical of those provided in a windowing environment, such as may be represented within a Windows™ Operating System GUI as provided by Microsoft Corporation and/or an OS X™ Operating System GUI, such as provided on an iPhone™, MacBook™, iMac™, etc., as provided by Apple, Inc., and/or another operating system. By way of another example, the user may interact with a GUI to generate a message intended for another electronic device such as a device, that is transmitted through a user interaction with a transmission button rendered on the GUI.

In the description hereafter, an application program (AP) - or software - may be seen as any tool that functions and is operated by means of a computer, with the purpose of performing one or more functions or tasks for a user or another application program. To interact with and control an AP, a GUI of the AP may be displayed on the mobile device display.

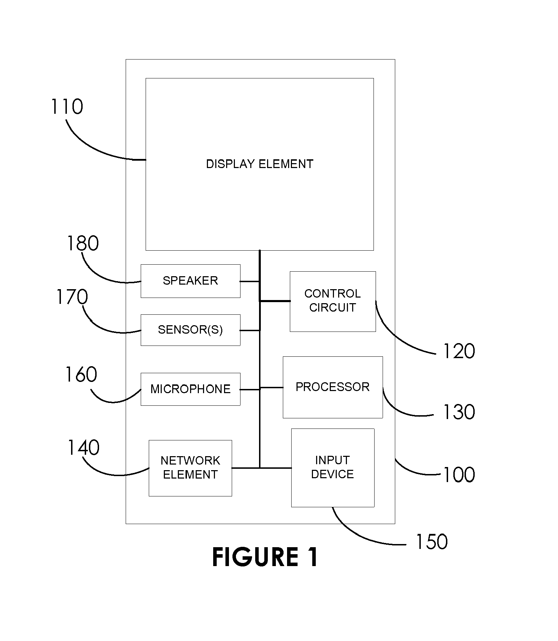

FIG. 1 is an illustration of an exemplary electronic device 100 used in the present system. The electronic device 100 comprises at least a display element 110, a control circuit 120, a processor 130, a network element 140, an input element 150, a microphone 160, possibly one or more sensor(s) 170 and possibly a speaker 180.

In the present system, the user interaction with and manipulation of the application program rendered on a GUI can be achieved using:
- the display element 110, or screen, which could be a touch panel;
- the input device 150 such as a key panel when available on the electronic device 100, or an external keyboard connected via the network element 140 (via Bluetooth connection for example).

Processor 130 may control the generation and the rendering of the GUI on the display element 110 (the information required to generate and manipulate the GUI resides entirely on the electronic device 100) or simply the rendering when the GUI is provided by a remote (i.e. network connected via network element 140) device (the information, including in some instances the GUI itself is retrieved via a network connection). However, advantageously, a control circuit 120 may be dedicated to such task of rendering the GUI on the display element 110. For simplicity sake, in the following description it will be considered that the sentence "the electronic device renders on the display element a GUI of an application program" should be understood either as "the processor of the electronic device renders on the display element a GUI of an application program" or "the control circuit of the electronic device on the display element a GUI of an application program" according to the way the electronic device 100 is implemented. The fact that the rendering on the display element is controlled either by the processor directly or by a control circuit depends on hardware constraints.

One or more sensors 170 are available, the reading of which can be used by the processor 130. Most of the new devices, such as the smartphones or tablets released on the market over the recent years have some components embedded thereon to track movement and positioning.

A microphone 170 can monitor or receive audio signals. Normally used to capture the voice of a user for voice application - e.g. phone -, the microphone 170 could also possibly receive ultrasound signal. This microphone 170 can monitor, upon request of an application program, for surrounding sounds. The control circuit or the processor may extract or isolate from a captured sound a given audio signal, possibly doing so on a continuous basis.

A speaker 180 may advantageously be implemented in the electronic device 100. This speaker 180 can be used by voice application to render the voice of a correspondent for a phone application program, or to listen to music played by the electronic device. This speaker 180 may advantageously emit an ultrasound or any kind of sound according to application program instructions. Characteristics of the speaker, for example the volume power, i. e. the power of emitting a given sound, are dependant upon the electronic device. Nevertheless, for a given model of electronic device, characteristics of the speaker may be quite similar from one model to another and thus may be considered the same.

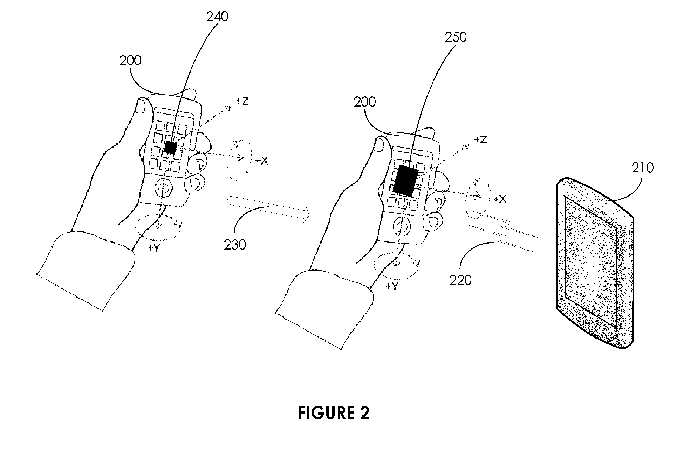

FIG.2 is an illustrative embodiment of present system. Here, two electronic devices 200 and 210 are represented. These electronic devices are similar to the electronic device described in FIG.1. Accordingly, the electronic device 200 comprises a display element and a microphone, the electronic device 200 further comprises a control circuit adapted to render on the display element a GUI of an application program. Here, for illustrative example, the graphical object 240 is rendered on the GUI of the display element of the electronic device 200 by an application program executed on the electronic device 200.

The electronic device 200 monitors, using the microphone, an audio signal 220 emitted by the second electronic device 210. Indeed, the electronic device 210 can emit an audio signal 220 using a speaker. Possibly, as to be discreet or in order to reduce possible interference, the audio signal 220 may be ultrasound. The nature of the audio signal itself may be a continuous audio signal, modulated audio signal or signal burst, or a combination of these. The man skilled in the art would know of an implementation for such step.

The electronic device 200 calculates a first parameter value using the strength of the received audio signal from the second electronic device 210. This first parameter could be advantageously calculated as to be proportional to the power of the received audio signal.

If the user moves the electronic device 200 toward the direction 230, meaning that the electronic device 200 is getting closer to the second electronic device 210, the electronic device 200 will receive the audio signal emitted by the second electronic device 210 louder. Thus, the value of the first parameter calculated by the electronic device 200 should increase, as the power of the received audio signal has increased. Here, in the exemplary embodiment of FIG.2, the electronic device 200 adapts the GUI according to the value of the first parameter by changing the size of the graphical object 240. Indeed, the size of the graphical object 240 is increased, the graphical object 250 being the graphical object 240 with its size increased. This effect is an illustration of a visual feedback allowed by the present method.

This basic embodiment of present system may be improved by pairing the first electronic device 200 with the second electronic device 210 prior to rendering the GUI of the application program. In this case, the two electronic devices may share an image, or more generally a GUI of an application program, said application program being executed by the first or the second electronic device. In one embodiment of present system, the first and second electronic device may display the same GUI on their respective display elements, or, on another embodiment, each electronic device 200 and 210 may display a different part of a shared image or video, or more generally of a GUI of an application program.

The step of pairing the two electronic devices 200 and 210 may be realized via any means, possibly via the same application program previously discussed or any other application program executed on one of the two electronic devices. Such pairing may be realized via direct or indirect connection between the two electronic devices. Direct if the two electronic devices pairs directly, indirect of the pairing is done through a third party server. Any network or transmission means may be used to do such pairing: any physical layer (wired line, wireless, audio signal, ...) and/or protocol layer (Bluetooth, IP, Short Message Service, WiFi, ...) may be used.

In a further embodiment of present system, the electronic device 210 can send to the electronic device 200 audio parameters, said audio parameters being ideally related to the audio signal emitted by the electronic device 210. Thus, the electronic device 200 receives audio parameters from the second electronic device 210 and calculates the first parameter value using the strength of the received audio signal and these audio parameters received from the second electronic device 210. Ideally, these audio parameters should include information on the power of the audio signal 220 emitted by the electronic device 210, and possibly indication on the model of the electronic device 210 and the technical characteristics of its speaker.

By using these audio parameters, particularly the power of the audio signal emitted and possibly the model of electronic device 210 (for example model of the electronic device could be something like an "iPhone 4"™), the electronic device 200 can compare the received audio signal 220 power with the emitted power of the audio signal by electronic device 210, possibly using some model or data attached to the model of electronic device 210 retrieved in a database (not represented in FIG. 2) using information included in the audio parameters. Indeed, this allows the value of the first parameter to be calculated more accurately, representing more precisely the distance between the two electronic devices 200 and 210 for example.

In one complementary embodiment, the electronic device 200 may send the first parameter to the second device. Thus, the second electronic device may calculate the distance between the two electronic devices using the first parameter value, representing somehow the power of the received audio signal by the first electronic device, the power of the emitted audio signal - known parameter as the second electronic device is the one emitting said audio signal - and some sound attenuation model. The calculation can be completed using calibration models or data attached to the models of the two electronic devices, for the emitting of sounds and/or the receiving of sounds.

In another embodiment of present system, the two electronic devices may not pair before using the presently described method. In such case, the method could be used in the pairing process as a help or guide to the pairing process. Indeed, the visual feed back of the method allows a user to easily recognize that two electronic devices are interacting, thus facilitating the pairing process.

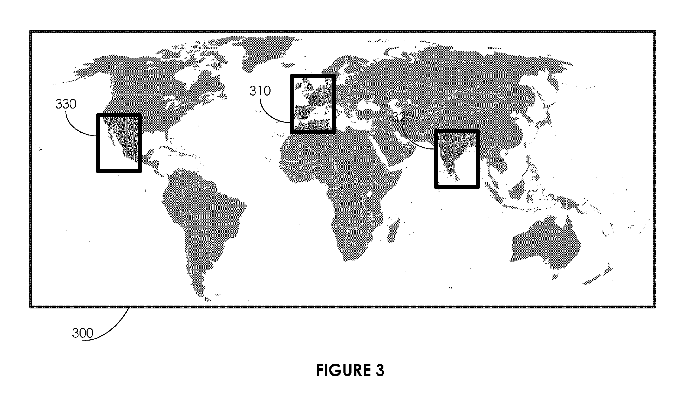

FIG. 3 is an illustrative embodiment of the present system. This embodiment can be seen as a continuation of the embodiment of FIG. 2, with the first electronic device 200 being represented by the electronic device 310, the second electronic device 210 being represented by the electronic device 320 and a third electronic device 330. The three electronic devices are typically tablets. In this further embodiment, the electronic device 310 calculates a first parameter value from the strength of an audio signal emitted by the second electronic device 320. Furthermore, the first electronic device 310 monitors using its microphone another audio signal emitted by the third electronic device 330. Then, the electronic device 310 calculates a second parameter value using the strength of the received audio signal from the third electronic device and adapts the GUI according to the value of the first parameter and the second parameter. Advantageously in present embodiment, the first electronic device has paired with the second and third electronic devices prior to rendering the GUI of the application program and received from either one of the second or third electronic device a third parameter characterizing a distance between said electronic devices. Using the first and second parameter values and this third parameter, and by using trigonometric formulae, the first electronic device can deduce a relative positioning of the three electronic devices. As the trigonometric formulae may possibly lead to two possible positioning of the second and third electronic device relatively to the first electronic device, the application program may need to solicit a user input as to decide between the two possibilities.

Indeed, the three electronic devices share in this exemplary embodiment a virtual map of the world 300, and each electronic device display a part of said virtual map of the world 300 accordingly to their positions. These positions are determined using present method as detailed hereafter. An initiation step may permit, using a user interaction, the disambiguation between the two mathematical results from the use of the trigonometric formulae.

It's worth noting that the trilateration technique (Wikipedia defines trilateration as the "*process of determining absolute or relative locations of points by measurement of distances*") used in the present method could advantageously be implemented using a fourth electronic device, or even more than four electronic devices. Indeed, using more than three electronic devices would permit, on most cases, the suppressing of disambiguation on the possible relative positioning of the different electronic devices, as the man skilled in the art knows.

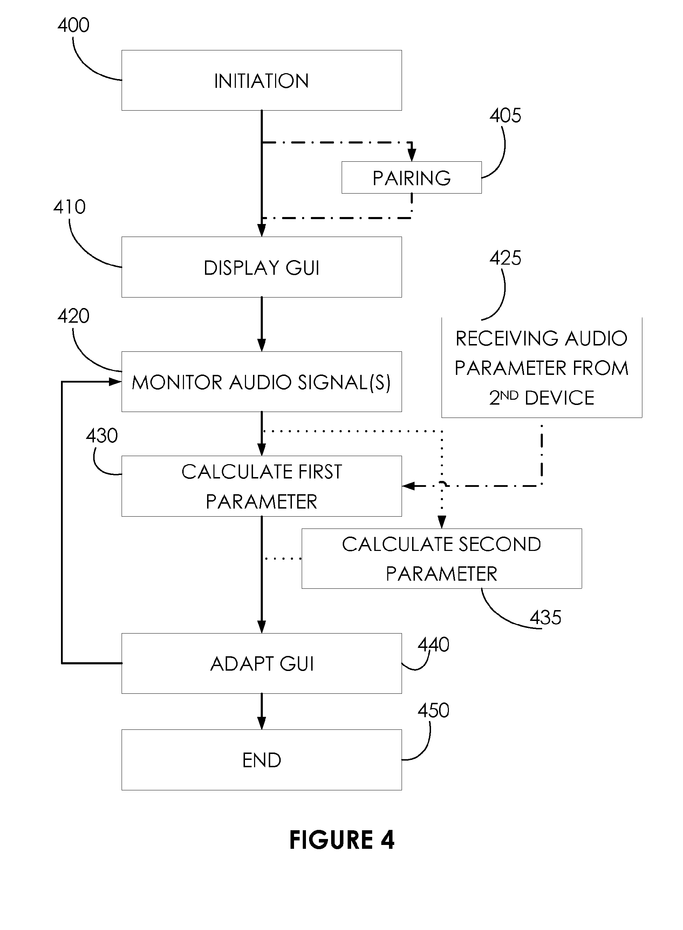

FIG. 4 is an illustrative embodiment of the present method. In a first step 400, a first electronic device according to FIG. 1, for example electronic device 200 or 310, initiates the present method. This is typically the execution of an application program on the first electronic device. This may previously includes a step of downloading or installing said application program on the first electronic device, or a step of connecting the first electronic device to a remote server or another electronic device. It could also be triggered by the monitoring via the microphone of a certain sound or pattern of sound emitted by another electronic device.

In the step 410, the first electronic device renders on the display element a GUI of the application program. The GUI may e.g. be displayed using all the available space on the display element, or only partially. It may only an icon on the display element for example. During the step 420, the first electronic device then monitors using the microphone an audio signal emitted by another electronic device, referred to as a second electronic device. This audio signal may possibly be an ultrasound signal. In the following step 430 of present method, the first electronic device calculates a first parameter value using the strength of the received audio signal. Accordingly, the value of this first parameter is calculated somehow proportionally to the power of the received audio signal and can be seen as an estimation of the distance between the first and the second electronic devices.

In one advantageous embodiment of present method, the first electronic device may receive audio parameters from the second electronic device in a step 425 and calculates the first parameter value using the power of the received audio signal and these audio parameters. Audio parameters may include an indication of the power of the audio signal emitted by the second electronic device and possibly indication on the model or type of the second electronic device. Thus, the first electronic device may retrieve in a database containing calibration data and/or speaker characteristics attached to the model or type of the second electronic device and use this calibration data to calculate the value of the first parameter. Such database may be built by the application program in a step not described in the present method, or constituted by the provider of the electronic device, the application program or the community of the application program users. With this additional step, the estimation of the distance between the first and the second electronic device through the first parameter value gets more accurate.

In a step not represented in FIG. 4, the first electronic device may send the first parameter to the second device.

In the step 440, the first electronic device adapts the GUI according to the value of the first parameter. By adaptation, it could be understood any modification to the GUI, meaning here the entire GUI or only one or several parts of the GUI. As previously described in FIG. 2, it could be for example the increase or decrease of the size of a graphical object of the GUI (see graphical object 240/250).

In an optional step 405, the first and second electronic device may pair. As described before, such pairing may be achieved through any other channel or possibly using audio signal. When paired, the first and second electronic device may share a GUI of an application program, said application program being executed on the first or the second electronic device, or possibly on any other electronic device or server as defined during the pairing process. For example, the first electronic device may render on the GUI of its display element the half part of an image shared with the second electronic device when the second electronic device renders on the GUI of its display element the other half part of the shared image. Possibly, instead of an image, it could be any graphical object, like a video or movie. The pairing process may allow any shared graphical object to be split between the two GUIs rendered on the display elements of the two electronic devices.

As described in FIG. 3, the first electronic device may monitor using the microphone an audio signal emitted by a third electronic device during the step 420. In this case, in a step 435, the first electronic device will calculate a second parameter value using the strength of the received audio signal from the third electronic device. The first electronic device will then adapt the GUI according to the value of the first parameter and the second parameter. Advantageously, the first electronic device and the third electronic device would have paired during the step 405, using the same method of pairing between the first and second electronic device or possibly using another pairing method. Audio signals of second and third electronic devices may be emitted independently, meaning without any synchronization mechanism, the first electronic device being able to distinguish between the two signals (the second and third electronic device two different wavelengths or sound pattern for example) or some mechanism of synchronization may allow each electronic device to emit alternately, mechanism that can advantageously be implemented if the electronic devices are paired.

In a step similar to step 425 but not represented in FIG. 4, the first electronic device may receive audio parameters from the third electronic device. Thus, the first electronic device can calculate the second parameter using the strength of the received audio signal from the third electronic device and the audio parameters received from the third electronic device. Similarly, the first electronic device may send the second parameter to the third device. In a symmetrical method, the third electronic device can use this second parameter to adapt its own GUI on its display element.

In a particularly advantageous embodiment of present method, the first electronic device receives from either one of the second or third electronic device a third parameter characterizing a distance between said second and third electronic devices. The first parameter value is an estimation of the distance between the first and second electronic devices, the second parameter value is an estimation of the distance between the first and third electronic devices and the third parameter value is an estimation of the distance between the second and third electronic devices. Thus, the first electronic device, with these three parameter values, has an estimation of the distances between the three electronic devices, or said otherwise, of the length of the three sides or edges of a virtual triangle, triangle which the three corners or vertices would be the first, second and third electronic devices. Thus, using some trigonometric formulae, for example the *law* of cosines or *law* of sines, it is possible to calculate the different angles of the triangle and to position the three electronic devices relatively to each other. As the calculation may give two possible triangle, this possible ambiguity can be disambiguate by interacting with the user, the application program requesting the user to choose between possible options, or other method relying for example on the sensor(s) 170 of FIG. 1 could be used (not described here).

Knowing this, the first electronic device adapts the GUI according to the values of the first, second and third parameters. This is particularly advantageous as it allows the three electronic devices to share an image or video, as shown in FIG. 3 and use this image or video as a virtual image or video. Thus, by moving one or more electronic devices, the user can select which part of the virtual image or video is displayed on each electronic device. This could advantageously be used to reconstitute from three different electronic devices a bigger virtual screen. For example, a user may share a video between three electronic devices and use the three display element of the devices as to simulate a bigger screen, improving the user experience.
said the present method may end in step 450 for example when the first electronic device detects that no audio signal has been received during a certain time, or when the user closes the application program.

FIG. 5 is an illustrative embodiment of the present system. In this embodiment of an existing method, the electronic devices 500, 501, 502 and 503 are put one next to the other as to reconstitute a virtual screen. In this example, the virtual screen is displaying a map of a "lower level" of a building (see 502). In this embodiment, the electronic devices need to touch each other. For example, the right side of the electronic device 502 is next to the left side of the electronic device 500. By using a contact technology, information is provided to an application program as to which electronic device is next to the other and as to which side of an electronic device is next to the other. Thus, the application program knows how the electronic devices are positioned next to the other and can organize the rendering on the different display elements of the electronic devices.

Finally, the above discussion is intended to be merely illustrative of the present system and should not be construed as limiting the appended claims to any particular embodiment or group of embodiments. Thus, while the present system has been described with reference to exemplary embodiments, such as sound based audio signals, it should also be appreciated that numerous modifications and alternative embodiments may be devised by those having ordinary skill in the art without departing from the broader and intended spirit and scope of the present system as set forth in the claims that follow. Further, while exemplary illustrations using two or three electronic devices were provided to facilitate an understanding of the present system, other embodiment of present method using more than three electronic devices can be implemented in accordance with further embodiments of the present system.

The section headings included herein are intended to facilitate a review but are not intended to limit the scope of the present system. Accordingly, the specification and drawings are to be regarded in an illustrative manner and are not intended to limit the scope of the appended claims.

In interpreting the appended claims, it should be understood that:
a) the word "comprising" does not exclude the presence of other elements or acts than those listed in a given claim;
b) the word "a" or "an" preceding an element does not exclude the presence of a plurality of such elements;
c) any reference signs in the claims do not limit their scope;
d) several "means" may be represented by the same item or hardware or software implemented structure or function;
e) any of the disclosed elements may be comprised of hardware portions (e.g., including discrete and integrated electronic circuitry), software portions (e.g., computer programming), and any combination thereof;
f) hardware portions may be comprised of one or both of analog and digital portions;
g) any of the disclosed devices or portions thereof may be combined together or separated into further portions unless specifically stated otherwise;
h) no specific sequence of acts or steps is intended to be required unless specifically indicated; and
i) the term "plurality of" an element includes two or more of the claimed element, and does not imply any particular range of number of elements; that is, a plurality of elements may be as few as two elements, and may include an immeasurable number of elements.

## Claims

1. An electronic device comprising a display element and a microphone, the electronic device further comprising a control circuit adapted to:
- render on the display element a GUI of an application program,
- monitor using the microphone an audio signal emitted by a second electronic device,
- calculate a first parameter value using the strength of the received audio signal,
- adapt the GUI according to the value of the first parameter.

2. The electronic device according to the previous claim, the control circuit being further arranged to:
- pair with the second electronic device prior to rendering the GUI of the application program.

3. The electronic device according to the previous claim, the control circuit being further arranged to:
- receive audio parameters from the second electronic device,
- calculate the first parameter using the strength of the received audio signal and the audio parameters received from the second electronic device.

4. The electronic device according to the previous claim 2, the control circuit being further arranged to:
- send the first parameter to the second device.

5. The electronic device according to any of the previous claims, the control circuit being further arranged to:
- monitor using the microphone an audio signal emitted by a third electronic device,
- calculate a second parameter value using the strength of the received audio signal from the third electronic device,
- adapt the GUI according to the value of the first parameter and the second parameter.

6. The electronic device according to the previous claim, the control circuit being further arranged to:
- pair with the third electronic device prior to rendering the GUI of the application program.

7. The electronic device according to the previous claim, the control circuit being further arranged to:
- receive audio parameters from the third electronic device,
- calculate the second parameter using the strength of the received audio signal and the audio parameters received from the third electronic device.

8. The electronic device according to the previous claim, the control circuit being further arranged to:
- send the second parameter to the third device.

9. The electronic device according to the previous claim, the control circuit being further arranged to:
- receive from either one of the second or third electronic device a third parameter characterizing a distance between said electronic devices,
- adapt the GUI according to the values of the first, second and third parameters.

10. A method for adapting a GUI, the method being performed by an application program executed on an electronic device, the electronic device comprising a display element and a microphone, the method comprising the steps of:
- rendering on the display element the GUI of the application program,
- monitoring using the microphone an audio signal emitted by a second electronic device,
- calculating a first parameter value using the strength of the received audio signal,
- adapting the GUI according to the value of the first parameter.

11. A method according to previous claim 10, further comprising a step of pairing with the second electronic device prior to rendering the GUI of the application program.

12. A method according to claims 10 or 11 further comprising the steps of:
- Monitoring using the microphone an audio signal emitted by a thirs electronic device,
- Calculating a second parameter value using the strength of the received audio signal from the third electronic device,
- adapting the GUI according to the value of the first parameter and the second parameter.

13. A system for adapting a GUI of an application program, the system comprising:
- a first electronic device according to any claims 1 to 9,
- a second electronic device according to any claims 1 to 9.

14. A system according to previous claim 13, further comprising a third electronic device according to any claims 1 to 9.

15. An application embodied on a computer readable medium and arranged to execute the method of claims 10, 11 or 12.
